# EUROPEAN PATENT APPLICATION

(11) **EP 3 800 888 A1**
(43) Date of publication of application: **07.04.2021**
(21) Application number: 20199687.3
(22) Date of filing: 01.10.2020
(51) Int. Cl.: H04N 19/167, H04N 19/33

(54) **ENCODING AND DECODING A VIDEO**

(30) Priority: 04.10.2019 GB 201914348
(71) Applicant: Vaion Limited, Uxbridge, Middlesex UB8 1JG (GB)
(72) Inventor: LANCIA, Samuel, Uxbridge, Middlesex UB8 1JG (GB)
(74) Representative: Mewburn Ellis LLP

(57) **Abstract**

A video encoding method. The method comprising the steps of: (i) acquiring a video frame; (ii) selecting one or more regions of interest within the video frame; (iii) encoding the or each region of interest at a first resolution; and (iv) encoding a base layer, wherein the base layer includes at least a portion of the video frame not contained within the or each region of interest, at a second resolution. The first resolution is higher than the second resolution.

## Description

### Field of the Invention

The present invention relates to a video encoding method and system for encoding video frames, and a video decoding method and system for decoding video frames.

### Background

Typically, a video (comprising plural frames) is encoded at one or more resolutions. Conventionally, these resolutions apply to the whole area of the video frame (i.e. the whole image).

Schemes exist which allow for the same image to be transmitted at multiple resolutions. For example, spatial scalability via Scalable Video Coding, where additional layers are used to provide an alternative resolution stream; and simulcast Advanced Video Coding, where multiple independent streams are transmitted. These schemes are designed to send complete images at different resolutions, so receivers can select which to display (based, for example, on available bandwidth or local display resolution).

In the context of security cameras, where network bandwidth and storage capacity is often a constraint, it would be advantageous to provide information about specific regions of a video frame at a high resolution.

### Summary

Accordingly, in a first aspect, embodiments of the present invention provide a video encoding method, comprising the steps of:
(i) acquiring a video frame;
(ii) selecting one or more regions of interest within the video frame;
(iii) encoding the or each region of interest at a first resolution; and
(iv) encoding a base layer, wherein the base layer includes at least a portion of the video frame not contained within the or each region of interest, at a second resolution;
wherein the first resolution is higher than the second resolution.

Advantageously, this allows the video frame so encoded to provide more information about the region(s) of interest whilst not increasing (or substantially increasing) the total bandwidth required to transmit the video frame. Moreover, the encoded region(s) of interest and encoded base layer may be allocated different data retention policies.

A computer so programmed makes the computer better in the sense of running more efficiently and effectively as a computer.

The method may include any one, or any combination insofar as they are compatible, of the optional features set out below.

The step of encoding the region(s) of interest, and the step of encoding the base layer, may be performed separately. For example the region(s) of interest may be extracted from the video frame and encoded, and the base layer may be separately encoded. Where the base layer is separately encoded, it may be encoded using a standards compliant encoding scheme (e.g. AVC or SVC) and can therefore be viewed on a broader base of players.

Alternatively, they may be performed simultaneously, and the encoding may be performed as a same step. For example, the step of encoding the region(s) of interest and encoding the base layer may be a single step of encoding, wherein the base layer has been downscaled before encoding (so as to be at the second, lower, resolution).

The base layer, in some embodiments, is the entire video frame including the region(s) of interest.

The region(s) of interest may be identified, for example, via a machine learning classifier trained to identify objects within the video frame. For example, the machine learning classifier may be trained to identifier people or cars, and to identify them as regions of interest. The region(s) of interest may be identified, for example, via an identification of areas in motion. This allows for the region(s) of interest to be identified automatically, for example based on object detection. This negates the need for an operator to select the regions of interest on a live video. Further, the region(s) of interest which have been identified can be used to create high resolution data for transfer and storage only for those region, thereby reducing bandwidth and storage related issues. Moreover, the region(s) of interest can either be shown at the higher resolution automatically, or shown separately.

The method may further include the step of downscaling the base layer, before it is encoded. This can further reduce the bandwidth and storage required.

The method may further include a step of acquiring plural video frame, as a video stream, and repeating steps (ii) - (iv) for all of or a subset of the video frames. This can amortise the overhead of the additional data over a longer time period. The group-of-pictures (GOP) structure for the high resolution encoded frames may have a different structure to the lower resolution encoded frames. This can further reduce the bandwidth and storage costs, as fewer I-frames can be provided.

The method may include a step of transmitting the encoded base layer and encoded region(s) of interest to a receiver. Transmitting the encoded base layer and encoded region(s) of interest to the receiver may include generating a composite canvas, the composite canvas being a single frame containing both the encoded base layer and encoded region(s) of interest. This means that the receiver need only subscribe to a single video stream. The method may include a step of transmitting data indicating the relative position of the base layer and region(s) of interest within the composite canvas to the receiver. This negates the need for the receiver to derive this information.

Transmitting the encoded base layer and the encoded region(s) of interest to the receiver may include transmitting the encoded base layer and encoded region(s) of interest as separately encoded layers of a video stream, or as separate video streams. The encoded region(s) of interest may be embedded as one or more supplementary enhancement information messages within a video stream containing the encoded base layer.

Encoding the region(s) of interest at the first resolution may include encoding a difference between the region(s) of interest and an upscaled version of the base layer.

Encoding the region(s) of interest the first resolution may include extracting the region(s) of interest from the acquired video frame before encoding.

Encoding the region(s) of interest at the first resolution may include:
identifying the region(s) of interest within the video frame; and
modifying the portion of the video frame outside of the region(s) of interest, so as to reduce the size of this portion once encoded.

For example, the portion of the video frame outside of the region(s) of interest may be filled with a constant colour, comprise only replicated data from the region(s) of interest, or a mirroring of data from within the region(s) of interest. As this data is not used in the derivation of a final image, the only criteria applying is whether it results in a more efficiently encoded image.

The video frame may be pre-processed before step (ii). For example, the pre-processing may include dewarping, where the image is from a panoramic camera.

In a second aspect, embodiments of the invention provide a video encoding system, the system including one or more processors configured to perform the method of the first aspect and including any one, or any combination insofar as they are compatible, of the optional features set out with reference thereto.

The video encoding system may include a security camera, configured to obtain the video frame.

In a third aspect, embodiments of the invention provide a video decoding method, including the steps of:
receiving an encoded video frame of a video stream, the video frame comprising:
   one or more encoded region of interest, at a first resolution;
   an encoded base layer, at a second resolution, the first resolution being higher than the second resolution;
decoding the or each encoded region of interest;
decoding the encoded base layer; and
combining the decoded base layer and the decoded region of interest.

The received video frame may be a composite canvas, containing the encoded region(s) of interest and encoded base layer.

Combining the decoded base layer and decoded region(s) of interest may include upscaling the base layer to a higher resolution than the second resolution, and updating a region of the upscaled base layer corresponding to the region(s) of interest with the decoded region(s) of interest.

In a fourth aspect, embodiments of the invention provide a video decoding system, including one or more processors configured to perform the method according to the third aspect and including any one, or any combination insofar as they are compatible, of the optional features set out with reference thereto.

Further aspects of the present invention provide: a computer program comprising code which, when run on a computer, causes the computer to perform the method of the first or third aspect; a computer readable medium storing a computer program comprising code which, when run on a computer, causes the computer to perform the method of the first or third aspect; and a computer system programmed to perform the method of the first or third aspect.

### Brief Description of the Drawings

Embodiments of the invention will now be described by way of example with reference to the accompanying drawings in which:
Figure 1 shows a flow chart of a method according to embodiments of the present invention;
Figures 2A - 2D show various steps of a method according to embodiments of the present invention;
Figure 3 shows a flow chart of a variant method according to embodiments of the present invention;
Figure 4 shows a flow chart of a variant method according to embodiments of the present invention;
Figure 5 shows a table of metadata to be encoded;
Figure 6 shows a composite canvas;
Figure 7 shows a flow chart of a method according to embodiments of the present invention;
Figures 8A - 8C show decoded images as received by a receiver;
Figure 9 shows an alternative method of storing regions of interest; and
Figures 10A and 10B show, respectively, decoded images as produced by the receiver.

### Detailed Description and Further Optional Features

Aspects and embodiments of the present invention will now be discussed with reference to the accompanying figures. Further aspects and embodiments will be apparent to those skilled in the art.

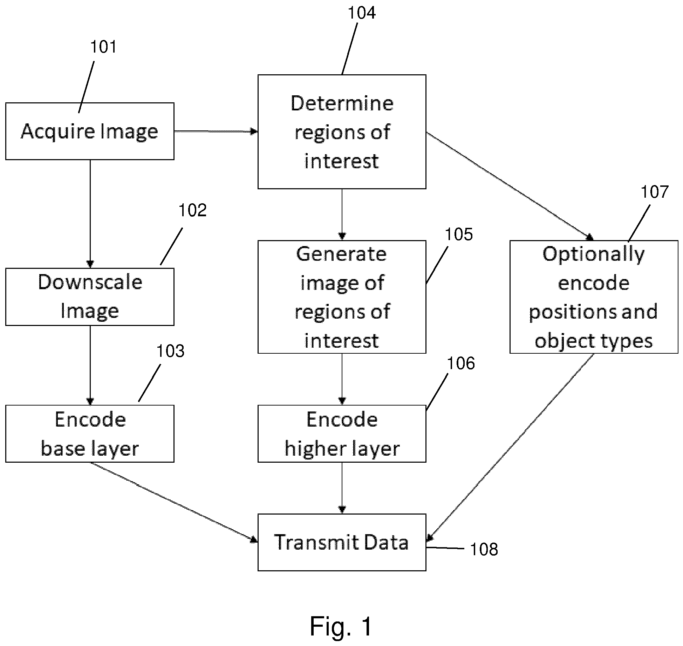

Figure 1 shows a flow chart of a method of encoding a video frame according to embodiments of the present invention. In a first step, 101, an image is acquired. The image is a video frame from a video stream, preferably from a security camera or similar. Next, in step 102, the entire image is downscaled so as to decrease the resolution. This downscaled image is then encoded as the base layer in step 103.

In parallel to steps 102 and 103, in step 104, one or more regions of interest within the image are identified. This identification may be performed by a machine learning based object classifier or similar, which identifies objects or regions within the image which are of interest. For example, people, vehicles, or moving objects, may be identified as regions of interest. Next, in step 105, images corresponding to the regions of interest are generated. This can involve, for example, extracting the regions of interest and a surrounding area (e.g. through feathering) from the acquired image. Alternatively, this can be performed by blanking or otherwise manipulating the areas around the regions of interest in a copy of the acquired image, as is discussed in more detail below. The generated image or images including the region or regions of interest are then encoded in step 106 as a layer or frame with a higher resolution to that in which the base layer was encoded. In parallel to steps 104 - 106, the position and type of objects identified in the image may be encoded together with the video frame or regions of interest.

In step 108, the encoded base layer, encoded region of interest (also referred to as a higher layer), and optionally the position and object types, are transmitted to a receiver.

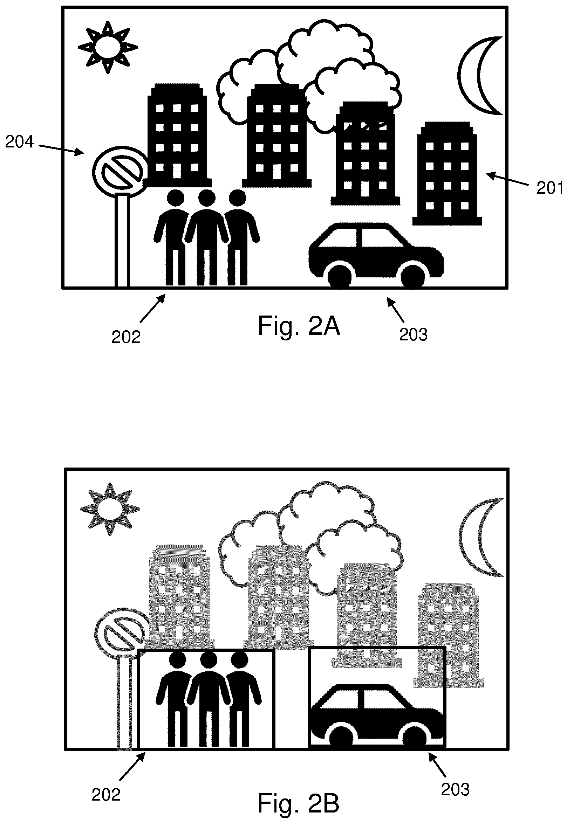

Figures 2A - 2D show various steps of a method according to embodiments of the present invention. In Figure 2A, a video frame from a video stream is acquired. The frame shows an image of, for example, buildings 201, people 202, car 203, and signpost 204 at a relatively high resolution. Next, as shown in Figure 2B, regions of interest may be identified as indicated by the boundary boxes around people 202 and car 203. The people 202 may be identified as a region of interest through a machine learning based classifier, which has been trained and instructed to highlight people as a region of interest. The identification of regions of interest may also be performed in an exclusionary manner, for example by the positive identification of signpost 204 or buildings 201 which has been marked as not of interest. Car 203 may be identified as a region of interest by determination that it has moved relative to the previous frame.

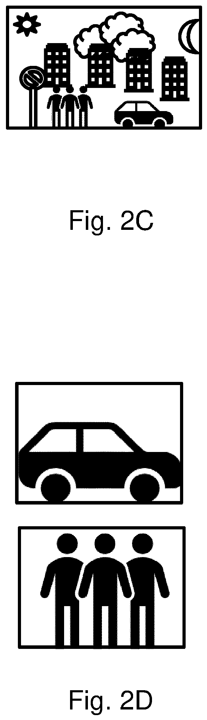

Next, as shown in Figure 2C, the video frame is downscaled to provide the base layer. The relative proportions are retained, but the overall quality of the image (e.g. in terms of pixel resolution) has been reduced. Similarly, as shown in Figure 2D, the regions of interest are extracted at a higher resolution that the downscaled base layer. It may be that the regions of interest are extracted and encoded at the resolution of the originally acquired image. The regions of interest, and base layer, are transmitted to a receiver for combination.

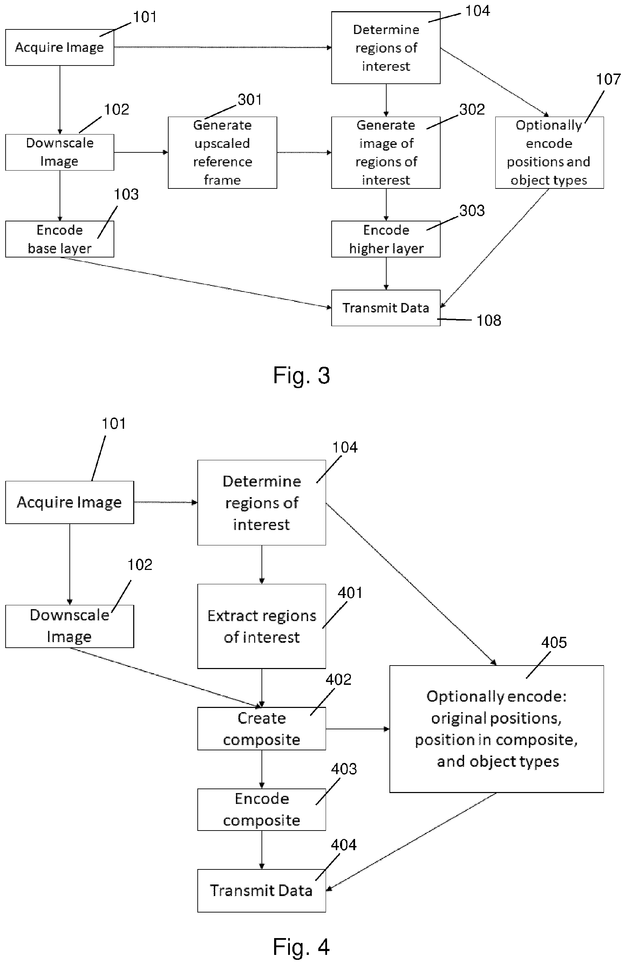

Figure 3 shows a variant method according to embodiments of the present invention. Where it shares method steps with the method shown in Figure 1, like reference numerals are used for like features. In contrast to the method shown in Figure 1, after the downscaled image is produced in step 102, an upscaled reference frame is generated in step 301 from the video frame. This is then used, in steps 302 and 303, to generate an image of the regions of interest and encode the higher layer. These steps are performed by encoding the difference between the upscaled reference frame and the regions of interest as acquired from the video frame.

Figure 4 shows a further variant method according to embodiments of the present invention. Where it shares method steps with the method shown in Figure 1, like reference numerals are used for like features. In contrast to the method shown in Figure 1, after the downscale image is produced in step 102, it is used to create a composite image in step 402. Prior to this, after determining the regions of interest in step 104, these regions are extracted from the video frame. These extracted regions, together with the downscaled image, are used to create a composite canvas in step 402. This composite canvas is then encoded in step 403.

In parallel, in step 405, the original positions of the regions of interest, the position of the base layer and the regions of interest in the composite canvas, and any objects identified in the frame, may be encoded.

Then, in step 404, the composite frame and, optionally, the encoded metadata, is transmitted to the receiver.

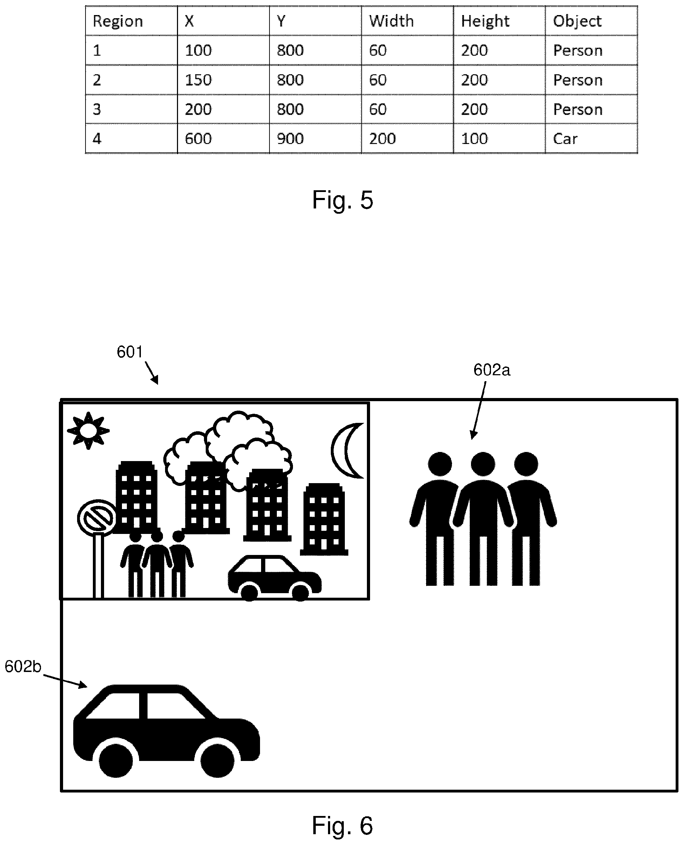

Figure 5 shows an example of a table containing metadata of the type which may be optionally encoded with the base layer and/or higher layer. The first column indexes the number of regions of interest within a given frame. The second and third columns describe the location of one corner of the region of interest, typically the upper-right hand corner. The third and fourth columns describe the size of the region of interest, where the region of interest is rectangular in shape. Other shapes may be used, in which case the third and fourth columns would be supplemented with other descriptors of the shape of the region of interest. The last column describes any objects within the region of interest. The example discussed is only one example of a plurality of ways the metadata may be recorded. In other examples, the metadata may specify a left/right extension.

Figure 6 shows a composite canvas derived using the method shown in and discussed in relation to Figure 4. The composite canvas is a single frame, including the downscaled base layer 601, as well as the regions of interest 602a, 602b.

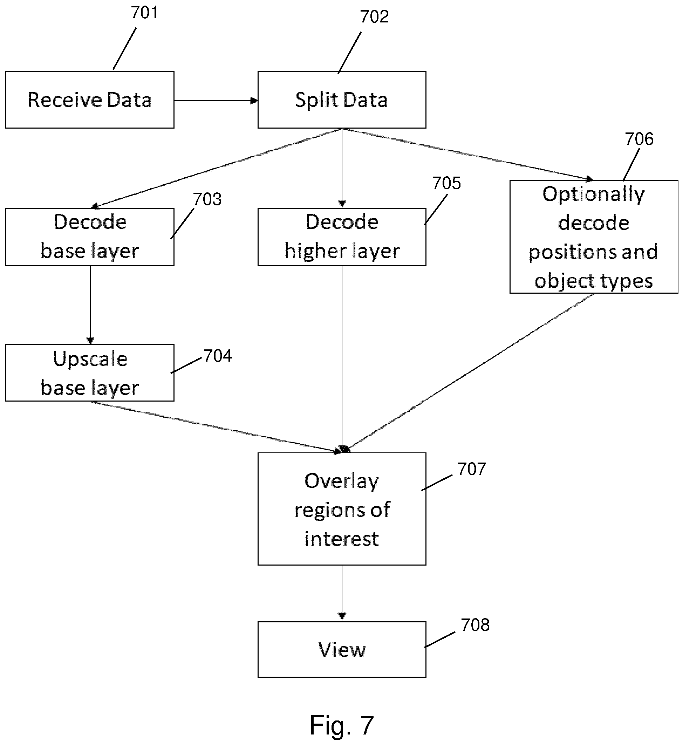

Figure 7 shows a flow chart of a video decoding method according to embodiments of the present invention. The method shown in Figure 7 is performed by a receiver of a video stream, where one or more frames of the video stream have been encoded using the method described previously.

In a first step, 701, the data is received. Typically this will be data containing a single frame of a video stream. Next, in step 702, the data is split into: (i) data pertaining to the encoded base layer; (ii) data pertaining to the encoded regions of interest; and (iii) data pertaining to the optionally encoded position and object types.

In step 703, the base layer is then decoded, after which it is upscaled in step 704. In parallel, the higher layer (i.e. regions of interest) is also decoded in step 705. Optionally, in a step which would be performed in parallel with steps 703 - 705, the positions and types of objects identified in the regions of interest may also be decoded in step 706.

After the decoding is completed, the upscaled base layer and regions of interest are combined in step 707. In this example, the combination is performed by overlaying the regions of interest on top of the upscaled base layer. The decoded position and object type may be used to improve the combination, and may be used to provide labels the objects identified.

After the combined image is formed, it is presented for viewing and/or storage in step 708. The decoded base layer, and decoded higher layer, may be stored separately and in accordance with different data retention policies.

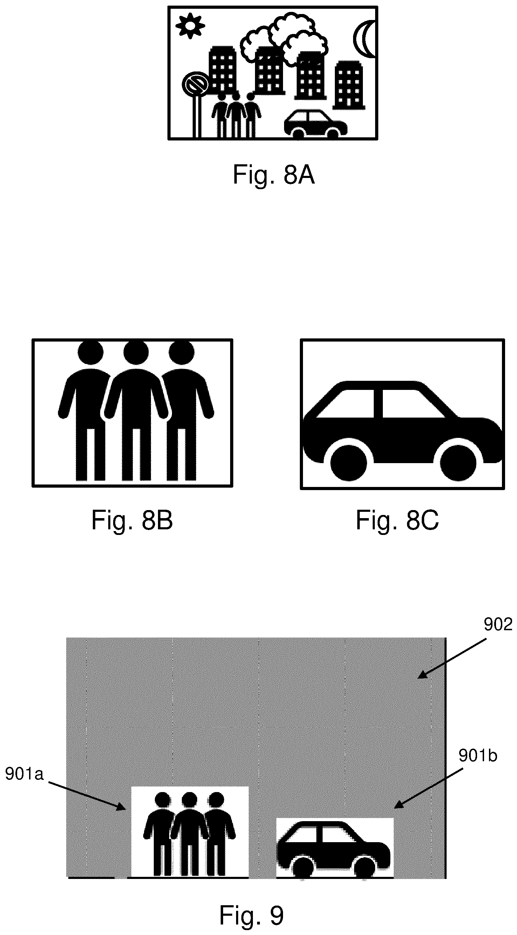

Figures 8A - 8C show decoded images as received by a receiver. The downscaled base layer is shown in Figure 8A, which represents the entire video frame captured by the camera, but at a relatively low resolution. Figures 8B and 8C show regions of interest, which are a sub-set of the video frame captured by the camera stored at a higher resolution than the base layer in figure 8A. Where the encoding method has produced a composite canvas, only the composite canvas will be received which is then split into the base layer and regions of interest.

Figure 9 shows an alternative method of storing regions of interest. Previously, where a composite canvas has not been generated, the regions of interest are extracted and stored as discrete images / layers in their own right. However, the regions of interest may instead be formed by blanking or otherwise removing the portion of the original video frame which is outside of the region of interest. As shown in Figure 9, the regions of interest 901a, 901 b are surrounded by a constant colour section 902. This allows the frame shown in Figure 9 to be encoded at a higher resolution, whilst not using as much space or bandwidth as would be the case if the original frame were encoded at this higher resolution. Instead of blanking with a constant colour section, as shown in Figure 9, the area around the regions of interest may be replaced with replications of the region of interest, mirroring of data from within the regions of interest, or other techniques or patterns which result in a smaller encoded frame. The area of the frame around the regions of interest are not used in the derivation of the video frame, and so techniques such as these can be used to make the encoding more efficient.

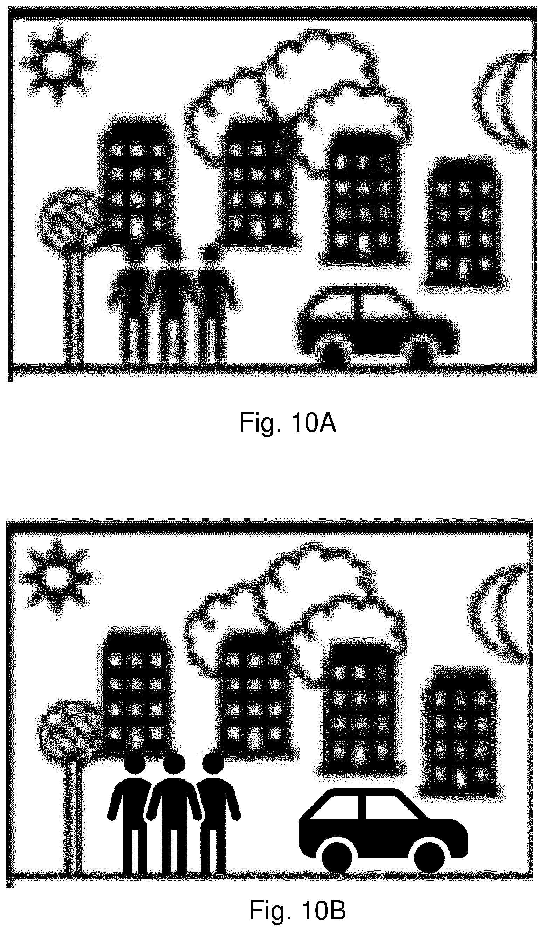

Figures 10A and 10B show, respectively, decoded images as produced by the receiver. Figure 10A is the decoded, and upscaled, base layer. As can be seen, the quality is reduced as compared to the originally acquired frame shown in Figure 2A. This is a result of the downscaling and encoding at a relatively low level of resolution.

In contrast, Figure 10B shows the resulting frame once the decoded regions of interest have been combined with the decoded base layer. The regions of interest have a higher resolution, and so the quality of the resulting image in these regions is higher than the remaining frame.

This combined frame can then be presented to a viewer and/or stored as a complete frame. Alternatively, the base layer and the regions of interest can be separately stored. When stored separately, different data retention policies can be applies to the base layer and regions of interest respectively.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A video encoding method, comprising the steps of:
(i) acquiring a video frame;
(ii) selecting one or more region of interest within the video frame;
(iii) encoding the one or each region of interest at a first resolution; and
(iv) encoding a base layer, wherein the base layer includes at least a portion of the video frame not contained within the or each region of interest, at a second resolution;
wherein the first resolution is higher than the second resolution.

2. The video encoding method of claim 1, wherein further including a step of:
downscaling the base layer, before it is encoded.

3. The video encoding method of either claim 1 or claim 2, further including a step of:
acquiring plural video frames, as a video stream, and to repeat steps (ii) - (iv) for all of or a subset of the video frames.

4. The video encoding method of any preceding claim, further including a step of:
transmitting the encoded base layer and encoded region(s) of interest to a receiver.

5. The video encoding method of claim 4, wherein transmitting the encoded base layer and encoded region(s) of interest to the receiver includes generating a composite canvas, the composite canvas being a single frame containing both the encoded base layer and the encoded region(s) of interest.

6. The video encoding method of claim 5, further including a step of:
transmitting data indicating the relative positions of the base layer and region(s) of interest within the composite canvas to the receiver.

7. The video encoding method of claim 4, wherein transmitting the encoded base layer and the encoded region(s) of interest to the receiver includes transmitting the encoded base layer and encoded region(s) of interest as separately encoded layers of a video stream, or as separate video streams.

8. The video encoding method of claim 7, wherein the encoded region(s) of interest are embedded as one or more supplementary enhancement information messages within a video stream containing the encoded base layer.

9. The video encoding method of any preceding claim, wherein encoding the region(s) of interest at the first resolution includes encoding a difference between the region(s) of interest and an upscaled version of the base layer.

10. The video encoding method of any preceding claim, wherein encoding the region(s) of interest at the first resolution includes extracting the region(s) of interest from the acquired video frame before encoding.

11. The video encoding method of any of claims 1 to 9, wherein encoding the region(s) of interest at the first resolution includes:
identifying the region(s) of interest within the video frame; and
modifying the portion of the video frame outside of the region(s) of interest, so as to reduce the size of this potion once encoded.

12. The video encoding method of any preceding claim, wherein the video frame is pre-processed before step (ii).

13. The video encoding method of claim 12, wherein the pre-processing includes dewarping.

14. A video encoding system, the system including one or more processors configured to perform the method of any preceding claim.

15. The video encoding system of claim 14, including a security camera configured to obtain the video frame.

16. A video decoding method, including the steps of:
receiving an encoded video frame of a video stream, the video frame comprising:
one or more encoded region of interest, at a first resolution;
an encoded base layer, at a second resolution, the first resolution being higher than the second resolution;
decoding the or each encoded region of interest;
decoding the encoded base layer; and
combining the decoded base layer and the decoded region(s) of interest to form a decoded video frame.

17. The video decoding method of claim 16, wherein the received video frame is a composite canvas, containing the encoded region(s) of interest and the encoded base layer.

18. The video decoding method of either claim 16 or claim 17, wherein combining the decoded base layer and decoded region(s) of interest includes upscaling the base layer to a higher resolution than the second resolution, and updating a region of the upscaled base layer corresponding to the region(s) of interest with the decoded region(s) of interest.

19. A video decoding system, including one or more processors configured to perform the method of any of claims 16 - 18.
